(19) Europäisches Patentamt
European Patent Office
Office européen des brevets

(11) **EP 3 060 364 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **14781094.9**

(22) Anmeldetag: **19.09.2014**

(51) Int Cl.:
*B22D 2/00* (2006.01)   *G01J 5/08* (2006.01)
*B22D 11/057* (2006.01)   *B22D 11/059* (2006.01)
*B22D 11/18* (2006.01)   *B22D 11/20* (2006.01)
*G01K 1/14* (2006.01)   *G01K 11/32* (2006.01)

(86) Internationale Anmeldenummer:
**PCT/EP2014/069950**

(87) Internationale Veröffentlichungsnummer:
**WO 2015/058911 (30.04.2015 Gazette 2015/17)**

(54) **STRANGGIESSKOKILLE MIT EINEM TEMPERATURSENSOR UND HERSTELLUNGSVERFAHREN FÜR DIE STRANGGIESSKOKILLE MIT DEM TEMPERATURSENSOR**

CONTINUOUS CASTING MOULD WITH A TEMPERATURE SENSOR AND PRODUCTION METHOD FOR THE CONTINUOUS CASTING MOULD WITH THE TEMPERATURE SENSOR

LINGOTIÈRE DE COULÉE CONTINUE ÉQUIPÉE D'UN CAPTEUR DE TEMPÉRATURE ET PROCÉDÉ DE FABRICATION DE LA LINGOTIÈRE DE COULÉE CONTINUE ÉQUIPÉE DU CAPTEUR DE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2013 DE 102013221485**
**05.12.2013 DE 102013224977**

(43) Veröffentlichungstag der Anmeldung:
**31.08.2016 Patentblatt 2016/35**

(73) Patentinhaber: **Primetals Technologies Austria GmbH**
**4031 Linz (AT)**

(72) Erfinder:
• **LANG, Oliver**
**A-4407 Dietach (AT)**
• **WINDER, Martin**
**4173 St. Veit i.M. (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
DE-A1- 10 236 033   DE-A1-102008 060 507
DE-A1-102009 060 548   DE-A1-102010 034 729
JP-A- H0 947 855   JP-A- 2008 043 981

**Beschreibung**

Gebiet der Technik

Die vorliegende Erfindung betrifft das technische Gebiet des Stranggießens. In einer Stranggießkokille einer Stranggießmaschine wird flüssiges Metall, z. B. Stahl, zu einem zumindest teilerstarrten Strang vergossen, der kontinuierlich aus der Stranggießkokille ausgezogen und in der nachfolgenden Strangführung der Stranggießmaschine gestützt, geführt und weiter abgekühlt wird.

Konkret betrifft die Erfindung eine Stranggießkokille mit zumindest einem Temperatursensor, umfassend eine Kupferplatte die eine Nut mit einem Nutgrund aufweist, einen Lichtwellenleiter als Temperatursensor der in einer Kanüle verläuft, und ein Füllmaterial das die Nut zumindest abschnittsweise abschließt. Durch den Temperatursensor kann einerseits auf Vorgänge, z.B. auf das Anhaften des Strangs an die Kokilleninnenwand, im Inneren der Stranggießkokille rückgeschlossen werden. Andererseits kann natürlich auch einfach die Temperatur der Kokille selbst gemessen werden.

Außerdem betrifft die Erfindung ein Herstellungsverfahren für die Stranggießkokille mit dem Temperatursensor.

Stand der Technik

Aus dem Stand der Technik ist eine Stranggießkokille mit einem Temperatursensor schon bekannt.

Bei einer bekannten Ausführungsform weist die Stranggießkokille mehrere sogenannte Thermoelemente auf, wobei über thermoelektrische Spannungsänderung der Thermoelemente die Temperaturverteilung in der Kokille gemessen werden kann. Obwohl sich Thermoelemente in der Praxis bewährt haben, werden für die Erfassung einer räumlich relativ genau diskretisierten Temperaturverteilung in der Kokille viele Thermoelemente benötigt, wodurch ein hoher Verkabelungsaufwand entsteht. Außerdem sind Thermoelemente empfindlich gegenüber elektromagnetischen Feldern, wie sie bspw. bei Rühreinrichtungen für Kokillen auftreten.

Bei einer weiteren bekannten Ausführungsform werden anstelle von Thermoelementen Lichtwellenleiter (typischerweise Glasfasern) mit mehreren Faser-Bragg-Gittern verwendet. Dadurch kann die Temperatur in der Kokille an mehreren, einen Abstand zueinander aufweisenden, Messpunkten (den Orten an denen sich die Faser-Bragg Gitter befinden) der Glasfaser gemessen werden. Dadurch wird der Verkabelungsaufwand reduziert. Nachteilig an der Verwendung von Lichtwellenleitern mit Faser-Bragg-Gittern ist, dass der Lichtwellenleiter nicht nur die Temperatur sondern auch die Dehnungsänderung des Lichtwellenleiters misst (gemäß

$$\frac{\Delta\lambda_B}{\lambda_B} = C_s . \epsilon + C_T . \Delta T$$

verschiebt sich die Wellenlänge $\lambda_B$ um $\Delta\lambda_B$ bei einer Temperaturänderung $\Delta T$ und der Dehnung $\epsilon$ der Glasfaser. Die Koeffizienten $C_s$ und $C_t$ geben die Abhängigkeit von der Dehnung und der Temperatur an, vgl. http://en.wikipedia.org/wiki/Faser Bragg grating).

Um eine Temperaturänderung der Stranggießkokille möglichst rasch erfassen zu können, benötigen Lichtwellenleiter eine möglichst gute thermische Anbindung an die Kokille. Da die Fasern jedoch mechanisch wesentlich empfindlicher als herkömmliche Thermoelemente sind, müssen die Fasern mechanisch geschützt werden.

Bei einer bekannten Ausführungsform werden die Glasfasern direkt in das Werkstück eingegossen, z. B. durch das formschlüssige Eingießen der Glasfaser durch Kunstharz, Polyester oder ähnlichem. Dadurch ist zwar ein ausreichend hoher mechanischer Schutz gegeben, jedoch wird der Faser die thermische Ausdehnung des umgebenden Materials aufgezwungen, was den gemessenen Temperaturwert verfälscht und auch rechnerisch nicht immer vollständig korrigiert werden kann. Außerdem reagiert die Glasfaser nur langsam auf Temperaturänderungen in der Kokille.

Bei einer anderen bekannten Ausführungsform wird eine Metallkanüle mit einer Glasfaser in einer Nut oder einer Bohrung verlegt. Dadurch ist die Faser zwar von den thermischen Spannungen des Werkstücks entkoppelt, jedoch ergibt sich wegen des Luftspaltes zwischen der Bohrung oder Nut und der Kanülenaußenwand eine schlechte Wärmeanbindung, was zu einem stark zeitverzögerten Temperatursignal führt. Außerdem führt die isotrope Wärmeleitfähigkeit der Metallkanüle dazu, dass das zu messende Temperatursignal verfälscht wird und die räumlich-zeitliche Auflösung darunter leidet (unscharfes Temperaturprofil über mehrere Temperaturmesspunkte).

Wie der Lichtwellenleiter in einer Stranggießkokille verlegt werden kann, sodass der Lichtwellenleiter zwar rasch auf eine Temperaturänderung der Stranggießkokille anspricht ohne aber zu stark durch die Dehnungsänderungen der Kokille bzw. der Kupferplatte beeinflusst zu werden, ist aus dem Stand der Technik nicht bekannt.

Aus der JP H09-47855 ist eine Stranggießkokille mit zumindest einem Temperatursensor bekannt, umfassend eine Kupferplatte mit einer Nut und einem Nutgrund, einen Lichtwellenleiter als Temperatursensor der in einer Kanüle verläuft, und ein Füllmaterial das die Nut zumindest abschnittsweise abschließt.

Außerdem ist aus der JP 2008043981 eine Stranggießkokille mit zumindest einem Temperatursensor bekannt, aufweisend eine Kupferplatte die zumindest teilweise von einer Bohrung durchdrungen ist und einen Lichtwellenleiter als Temperatursensor der in einer Kanüle verläuft.

Zusammenfassung der Erfindung

Die Aufgabe der Erfindung ist es, die Nachteile des Stands der Technik zu überwinden und eine Stranggießkokille mit einem Lichtwellenleiter als Temperatursensor darzustellen,

> wobei der Lichtwellenleiter rasch auf eine Temperaturänderung der Kokille anspricht, und
> wobei der Lichtwellenleiter dennoch vor mechanischen Beschädigungen gut geschützt und von thermischen Spannungen des umgebenden Materials abgeschirmt ist.

Außerdem soll ein einfaches und günstiges Herstellungsverfahren für die Stranggießkokille mit dem Temperatursensor gefunden werden.

Die erfindungsgemäße Aufgabe wird durch den Gegenstand von Anspruch 1 gelöst. Vorteilhafte Ausführungsformen sind Gegenstand der abhängigen Ansprüche.

Dabei wird eine Kanüle mit einem Glasfaser Lichtwellenleiter bzw. ein Teilabschnitt derselben (z.B. ein Fiber-Bragg-Sensorpunkt) in einer Nut auf der Kaltseite einer Stranggießkokille zwischen zwei Graphitfolien verlegt, sodass die Kanüle nicht am Nutgrund aufliegt und anschließend die Nut mit einem Füllstoff verschlossen. Die Folien sorgen durch ihre im Vergleich zu herkömmlichen Füllmaterialien sehr hohe Wärmeleitfähigkeit für eine gute thermische Anbindung der Glasfaser bei gleichzeitig sehr geringer Übertragung von Thermospannungen des umgebenden Materials. Das die Nut abschließende Füllmaterial sorgt schließlich für den nötigen mechanischen und chemischen Schutz und kann zur Anwendung passend gewählt werden: Kriterien sind etwa Wasserdichtheit, mechanische Festigkeit, Elastizität hinsichtlich Temperaturdehnungen, Temperatur- und Korrosionsbeständigkeit etc.

Unter der Kaltseite soll in dieser Schrift die der Heißseite (d.h. die Seite die in Kontakt mit dem flüssigen Metall ist) abgewandte Seite der Kupferplatte verstanden werden, unabhängig davon ob die Kupferplatte aus reinem Kupfer oder einer Kupferlegierung besteht und ob sich die Kaltseite der Kupferplatte ggf. an einer Stützkonstruktion (z.B. dem Wasserkasten) abstützt.

Um beim Entfernen des Füllmaterials die Glasfaser innerhalb der Kanüle nicht zu beschädigen, ist es vorteilhaft, wenn zwischen der zweiten wärmeleitenden Folie und dem Füllmaterial eine reißfeste Schicht (z.B. ein Textilband) angeordnet ist.

Dabei ist es vorteilhaft, wenn die Wärmeleitfähigkeit der reißfesten Schicht in deren Dickenrichtung << als die niedrigste Wärmeleitfähigkeit der ersten und zweiten wärmeleitenden Folien ist. Bei einer Graphitfolie ist Wärmeleitfähigkeit in Dickenrichtung z < als die Wärmeleitfähigkeit in Längs-und Querrichtung x, y.

Es ist zweckmäßig, wenn das Füllmaterial ein Kunstharz, ein Kunststoff wie Polyester oder PTFE, oder ein Metall ist. Das Füllmaterial kann z.B. durch Vergießen, Laminieren oder Fügen (z.B. Löten) aufgebracht werden.

Die erfindungsgemäße Aufgabe wird ebenfalls durch den Gegenstand von Anspruch 5 gelöst. Vorteilhafte Ausführungsformen sind Gegenstand der abhängigen Ansprüche.

Die Stranggießkokille mit dem zumindest einen Temperatursensor weist auf

- eine Kupferplatte die zumindest teilweise von einer Bohrung durchdrungen ist;
- einen Lichtwellenleiter als Temperatursensor der in einer Kanüle verläuft;
- eine erste Graphitfolie die über die Längserstreckung der Kanüle zumindest abschnittsweise den Spalt zwischen der Innenwand der Bohrung und der Außenwand der Kanüle überbrückt.

Dabei wird zumindest in einem Längsabschnitt mit einem Temperaturmesspunkt der Glasfaser (Fiber-Bragg-Gitter) eine Schicht einer ersten wärmeleitenden Folie zwischen der Kanüle und der Innenwand der Bohrung angeordnet, sodass ein hoher Wärmefluss von der Innenwand der Bohrung zur Außenwand der Kanüle sichergestellt ist. Im Idealfall überbrückt die Folie den Spalt zwischen der Innenwand der Bohrung und der Außenwand der Kanüle vollständig. Bei einer technisch aber fast äquivalenten Ausführungsform kann aber auch ein (Luft-) Spalt bestehen bleiben. Durch die Flexibilität der ersten wärmeleitenden Graphitfolie, sowie wegen der die Glasfaser umgebenden Kanüle, werden wiederum einerseits Thermospannungen nur in sehr geringem Maße an die Glasfaser übertragen (dadurch ergibt sich ein genaueres Temperatursignal), andererseits ist durch die erhöhte Wärmeleitfähigkeit des Graphits in Richtung x, y der Folienschichten $\lambda_{x\text{-}y} \sim 100$ $W/(m.K)$ im Vergleich dazu in der Dickenrichtung z $\lambda_z \sim 10$ $W/(m.K)$ eine sehr gute Temperaturanbindung gegeben, sodass das ein im Vergleich zu herkömmlichen nur mit Luft gefüllten Bohrungen ein viel zeitnäheres und räumlich besser aufgelöstes Temperatursignal im Glasfasersensor entsteht.

Dabei ist es vorteilhaft, wenn die erste und/oder die zweite Graphitfolie eine anisotrope Wärmeleitfähigkeit aufweist. Einerseits wird eine gute Wärmeleitung von der Bohrung oder der Nut zur Kanüle und zum Lichtwellenleiter sichergestellt; andererseits wird eine übermäßig hohe Wärmleitung in Längsrichtung der Bohrung bzw. der Nut verhindert, sodass die räumliche bzw. die zeitliche Auflösung nicht leidet.

Wie bereits oben dargestellt, bestehen die erste und/oder die zweite Graphitfolie im Wesentlichen aus Graphit oder Graphen. Folien dieser Materialien weisen eine hohe Wärmeleitfähigkeit in Längs- und Querrichtung auf, allerdings eine weitaus geringere Wärmeleitfähigkeit in der Dickenrichtung der Folie.

Um eine hohen Wärmefluss zur Kanüle bzw. zum Lichtwellenleiter sicherzustellen aber den Wärmefluss in der Längsrichtung der Nut bzw. der Bohrung niedrig zu halten, ist es vorteilhaft, wenn die Dickenrichtung der ersten und/oder zweiten wärmeleitenden Folie in der Längsrichtung der Nut oder der Bohrung verläuft.

Außerdem ist es vorteilhaft, wenn die Kanüle aus Kunststoff, vorzugsweise hochbelastbares PTFE, aus Glasseide, aus Fiberglas oder aus einer Keramik besteht. All diese Materialien weisen verglichen mit Metall eine wesentlich geringere Wärmeleitfähigkeit auf, was sich günstig auf die räumliche Auflösung auswirkt. Die mechanische Stabilität dieser Materialien ist zudem ausreichend hoch.

Bei beiden Ausführungsformen gemäß der Ansprüche 1 und 5 ist es vorteilhaft, wenn der Lichtwellenleiter mehrere Temperaturmesspunkte über der Längserstreckung des Lichtwellenleiters aufweist, wobei die Temperaturmesspunkte vorzugsweise als Faser-Bragg-Gitter ausgebildet sind. Alternativ können die Temperaturen auch durch ein Messsystem, das auf dem Rayleigh Prinzip beruht, ermittelt werden.

Um aus dem Lichtwellenleiter unmittelbar ein Temperatursignal zu bekommen, weist die Stranggießkokille mit dem Lichtwellenleiter eine Auswerteeinheit zur Auswertung der Temperatur an den Temperaturmesspunkten des Lichtwellenleiters auf, wobei die Auswerteeinheit mit dem Lichtwellenleiter verbunden ist.

Ein Herstellungsverfahren für eine Stranggießkokille mit einem Temperatursensor nach einem der Ansprüche 1 bis 4 und 6 bis 11, wobei die Stranggießkokille eine Kupferplatte mit einer Nut auf dessen Kaltseite aufweist und ein Lichtwellenleiter als Temperatursensor in einer Kanüle verläuft, umfasst die Verfahrensschritte:

- Einbringen der Kanüle zwischen einer ersten wärmeleitenden Folie und einer zweiten wärmeleitenden Folie, sodass die Dickenrichtung der beiden wärmeleitenden Folien normal zur Längsrichtung der Kanüle verläuft;
- Einlegen der die Kanüle einbettenden wärmeleitenden Folien in den Nutgrund der Nut derart, dass die Richtung der wärmeleitenden Folien mit der größten Wärmeleitfähigkeit in der Tiefenrichtung der Nut verläuft;
- Abschließen der Nut durch ein Füllmaterial, wobei das Füllmaterial die Nut zumindest abschnittsweise abschließt.

Eine Graphitfolie weist in ihrer Längs- und Querrichtung die höchste Wärmeleitfähigkeit auf.

Ein Herstellungsverfahren für eine Stranggießkokille mit einem Temperatursensor nach einem der Ansprüche 5 bis 11, wobei die Stranggießkokille eine Kupferplatte mit einer Bohrung aufweist und ein Lichtwellenleiter als Temperatursensor in einer Kanüle verläuft, umfasst die Verfahrensschritte:

- Einführen von mehreren wärmeleitenden Folien in die Bohrung, sodass die Dickenrichtung der ersten wärmeleitenden Folien in der Längsrichtung der Bohrung verlaufen;
- Durchstoßen der von ersten wärmeleitenden Folien ausgefüllten Bohrung;
- Einführen der den Lichtwellenleiter beinhaltenden Kanüle in die Bohrung, wodurch die ersten wärmeleitenden Folien den Spalt zwischen der Innenwand der Bohrung und der Kanüle ausfüllen.

Dabei ist es vorteilhaft, wenn das Durchstoßen durch eine steife Kanüle, vorzugsweise eine Metall- oder Kunststoffkanüle, erfolgt. Alternativ dazu kann das Durchstoßen durch ein anderes Stoßwerkzeug erfolgen.

Alternativ dazu kann das Herstellen einer Stranggießkokille mit einem Temperatursensor nach einem der Ansprüche 5 bis 11, wobei die Stranggießkokille eine Kupferplatte mit einer Bohrung aufweist und ein Lichtwellenleiter als Temperatursensor in einer Kanüle verläuft, durch folgende Verfahrensschritte erfolgen:

- Aufschieben von mehreren Schichten einer ersten wärmeleitende Folie auf die Kanüle, sodass die Dickenrichtung der ersten wärmeleitenden Folie in der Längsrichtung der Kanüle verläuft und die Schichten der ersten wärmeleitende Folien an der Mantelfläche der Kanüle anliegen;
- Einführen der ersten wärmeleitenden Folien, der Kanüle und des Lichtwellenleiters in die Bohrung, wodurch zumindest abschnittsweise die Schichten der ersten wärmeleitenden Folie an der Innenwand der Bohrung anliegen.

Bei dieser Ausführungsform ist der Wärmestrom in radialer Richtung maximal und in axialer Richtung minimal.

Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei die folgenden Figuren zeigen:

Fig 1: eine perspektivische Darstellung einer Stranggießkokille für das Stranggießen von runden Stahlsträngen mit einem Lichtwellenleiter als Temperatursensor nach dem Stand der Technik,

Fig 2 und 3: eine perspektivische Darstellung einer ersten und einer zweiten Variante einer Kupferplatte mit einer Nut, in der eine Kanüle mit einer Glasfaser eingelegt ist,

Fig 4 und 5: zwei Darstellungen der Temperaturverläufe in einer Kokille durch Isothermen,

Fig 6: eine perspektivische Darstellung einer Kupferplatte einer Stranggießkokille mit einer Nut,

Fig 7: eine Schnittdarstellung einer dritten Variante einer Kupferplatte mit einer Nut, in der eine Kanüle mit einer Glasfaser eingelegt ist,

Fig 8 und 9: eine Schnittdarstellung einer ersten und einer zweiten Variante einer Kupferplatte mit einer Bohrung, in der eine Kanüle mit einer Glasfaser eingelegt ist.

Beschreibung der Ausführungsformen

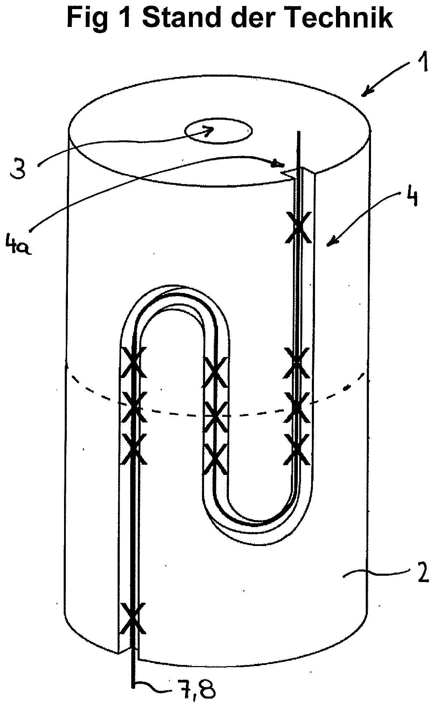

Die Figur 1 zeigt eine Stranggießkokille 1 mit einer Heißseite 3 und einer Kaltseite 2 aus der DE 10 2009 060548 A1. Dabei wird als Temperatursensor 7 ein Lichtwellenleiter 8 in den Nutgrund 4a einer Nut 4 eingelegt. Der Lichtwellenleiter 8 weist mehrere in der Figur durch X gekennzeichnete Temperaturmessstellen auf. Wie der Lichtwellenleiter 8 in der Nut 4 befestigt und vor mechanischen Beschädigungen geschützt wird, ist offen.

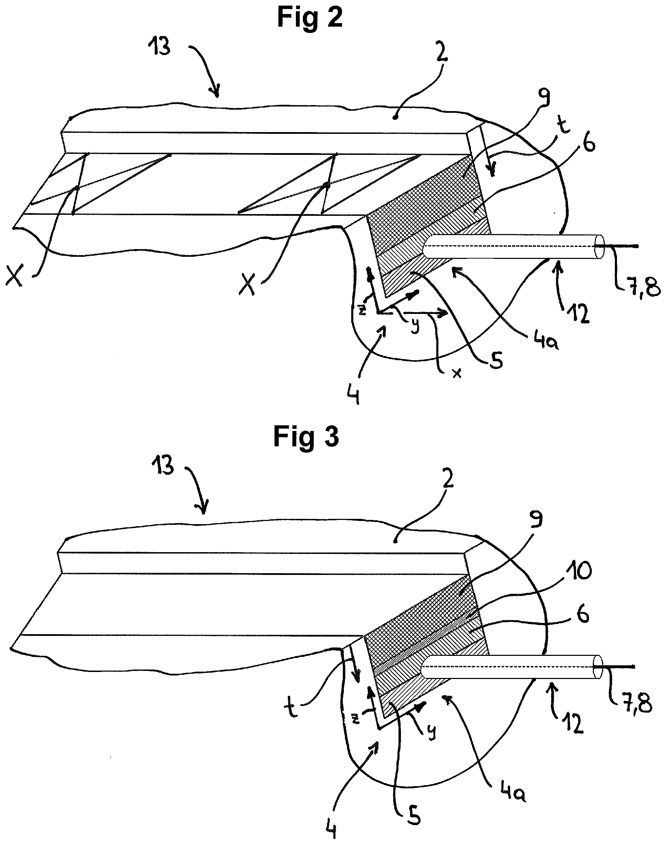

Die Fig 2 zeigt eine erste Variante einer Kupferplatte 13 einer Stranggießkokille mit einer Nut 4, in die ein Glasfaser Lichtwellenleiter 8, der in einer Kanüle 12 (bspw. aus dem Kunststoff PTFE) verläuft, eingelegt worden ist. Die, z.B. durch Fräsen oder Erodieren hergestellte, Nut 4 ist auf der Kaltseite 2 der Kupferplatte 13 angeordnet. Um die Wärmeleitung von der Heißseite der Kupferplatte 13 zur Glasfaser 8 zu verbessern, ist die Kanüle 12 zwischen einer ersten wärmeleitenden Folie 5, die am Nutgrund 4a aufliegt, und einer zweiten wärmeleitenden Folie 6 eingebettet. Die beiden wärmeleitenden Folien 5, 6 sind jeweils so ausgerichtet, dass die Dickenrichtung z der Folien in der Tiefenrichtung t der Nut 4 verläuft. Die Längs-, Quer- und Dickenrichtung x, y, z der Folien bilden ein kartesisches Koordinatensystem aus. Die beiden Folien 5, 6 bestehen aus Graphit, wobei die Graphitfolien in Längs- und Querrichtung x, y eine Wärmeleitfähigkeit von ca. 100 W/(m.K) und in Dickenrichtung z eine Wärmeleitfähigkeit von ca. 10 W/(m. K) aufweisen. Zum Schutz der Glasfaser 8 ist die Nut vollständig durch ein Füllmaterial 9, bspw. aus Kunstharz, ausgegossen. So wie dargestellt, ist die Kanüle 12 in deren Längsrichtung vollständig zwischen der ersten und der zweiten wärmeleitenden Folie 5,6 eingebettet. Alternativ dazu wäre es ebenfalls möglich, die Kanüle 12 abschnittsweise nur im Bereich der Temperaturmesspunkte X in die wärmeleitenden Folien 5, 6 einzubetten. Die Längsabschnitte zwischen zwei benachbarten Temperaturmesspunkten X könnten demnach entweder einen Luftspalt oder ein Isoliermaterial zwischen dem Nutgrund 4a und der Kanüle 12 aufweisen.

Die Fig 3 zeigt eine zweite Variante zu Fig 2. Im Unterschied zu Fig 2 wurde zwischen der zweiten wärmeleitenden Folie 6 und dem Füllmaterial 9 eine reißfeste Schicht, hier ein Gewebeband, eingelegt.

Durch diese Schicht kann das Füllmaterial 9 entfernt werden, ohne dabei die Kanüle 12 bzw. die Glasfaser 8 zu verletzen. Dies ist bei einer Überarbeitung bzw. Instandsetzung der Kupferplatte vorteilhaft.

Bzgl. der Wärmeleitung wäre es bei den Figuren 2 und 3 besser, die Folien 5, 6 so zu orientieren, dass deren Dickenrichtung z in der Längsrichtung der Nut 4 verläuft. Dadurch ergäbe sich eine geringe Wärmeleitfähigkeit in der Längsrichtung der Nut 4 und eine hohe Wärmeleitfähigkeit quer dazu, d.h. auch in der Tiefenrichtung t der Nut 4. Da die Folien 5,6 nur eine geringe Schichtdicke aufweisen, bedingt dies aber einen höheren Fertigungsaufwand.

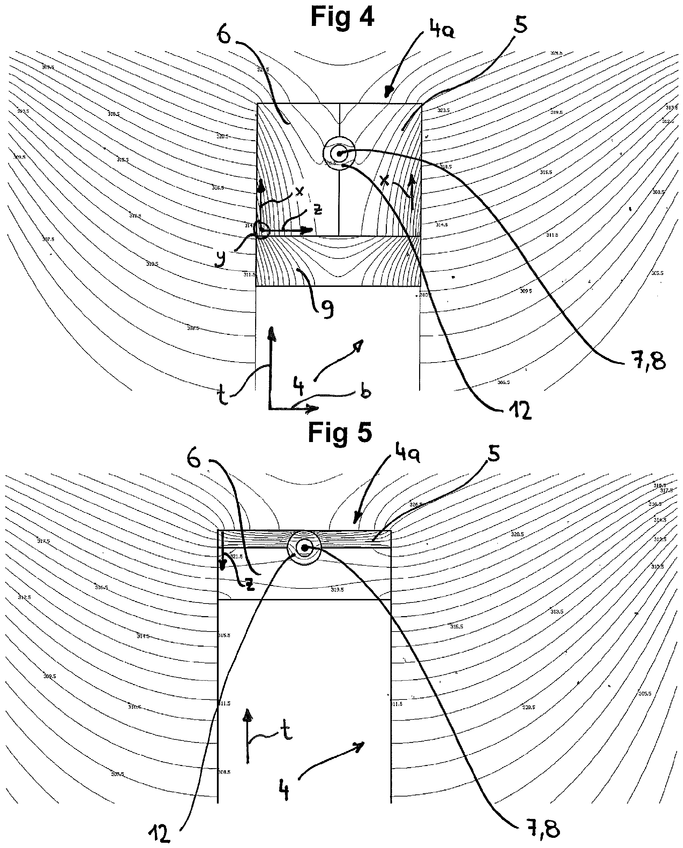

Die Fig 4 und 5 zeigen die Ergebnisse von zwei Vergleichsrechnungen mit jeweils identischen Anfangs- und Randbedingungen, die den Wärmetransport vom Nutgrund 4a der Nut 4 zur Glasfaser 8 zeigen. In der Fig 4 verlaufen die Dickenrichtungen z der ersten und die zweiten wärmeleitenden Folien 5, 6 in der Breitenrichtung b der Nut 4; in Fig 5 sind die Dickenrichtungen der Folien 5, 6 in der Tiefenrichtung t der Nut 4 ausgerichtet. Es zeigt sich, dass - obwohl die wärmeleitenden Folien 5, 6 der Fig 4 wesentlich dicker sind als die Folien 5, 6 der Fig 5 und in Fig 5 die Kanüle 12 direkt am Nutgrund 4a aufliegt - die Glasfaser 8 der Fig 4 eine höhere Temperatur erfährt (nämlich zwischen 326,5 und 327,5 °K) als in Glasfaser 8 in Fig 5, die nur eine Temperatur von 322 °K erfährt. Dies ist durch die höhere Wärmeleitfähigkeit der Folien 4,5 der Fig 4 in der Tiefenrichtung t der Nut 4 bedingt.

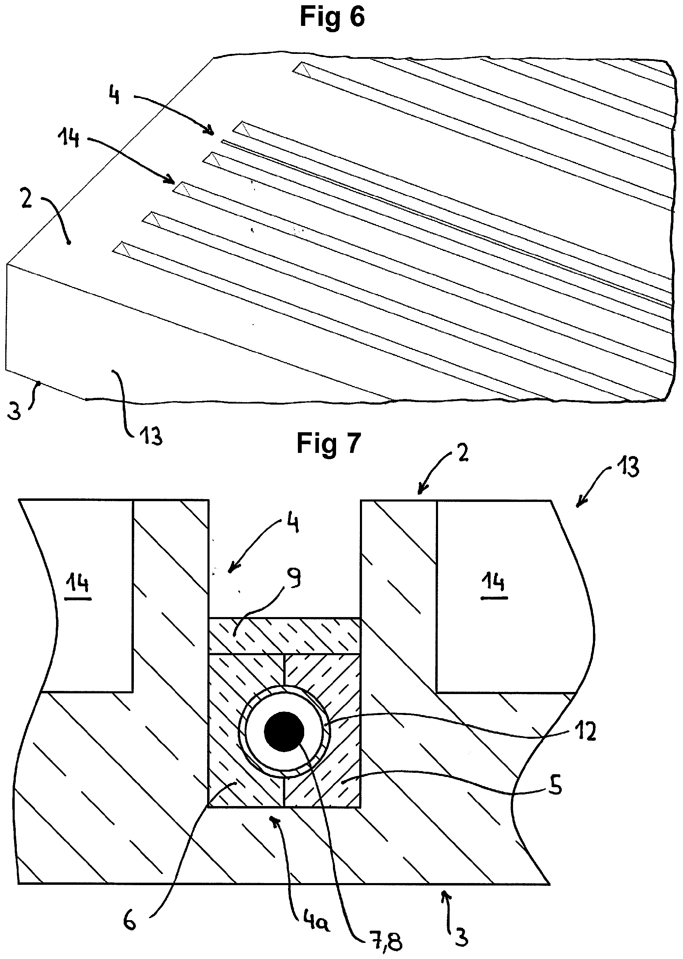

Die Fig 6 zeigt die Kaltseite 2 einer Kupferplatte 13 in einem Schrägriss. Die Nut 4, in der eine Kanüle 12 mit einer Glasfaser 8 eingelegt wird, befindet sich zwischen mehreren Kühlschlitzen 14, durch die ein Kühlmedium (hier Wasser) Wärme von der Heißseite 3 der Kokille abführt. Natürlich kann die Nut 4 auch mäanderförmig verlegt werden um durch eine Glasfaser, die in die Nut eingelegt ist, nicht nur die Temperatur in einem Horizont, sondern in mehreren Horizonten, der Kokille zu erfassen.

Die Fig 7 zeigt einen Schnitt durch eine Kupferplatte 13 mit einer Nut 4, in der ein Glasfaser Lichtwellenleiter 8 eingelegt wird. Die Anordnung des Füllmaterials 9, der Kanüle 12, der Glasfaser 8 und der ersten und zweiten wärmeleitenden Folien 5,6 sowie deren Ausrichtung entspricht der Fig 4.

Bei der Herstellung einer Stranggießkokille mit einer Kupferplatte 2 und einem Temperatursensor 7 nach Fig 4 wird wie folgt vorgegangen: Zuerst wird die Kanüle 12 zwischen einer ersten wärmeleitenden Folie 5 und einer zweiten wärmeleitenden Folie 6 eingebracht, sodass die Dickenrichtung z der beiden wärmeleitenden Folien 5,6 normal zur Längsrichtung der Kanüle 12 verläuft. Anschließend werden die die Kanüle 12 einbettenden wärmeleitenden Folien 5, 6 in den Nutgrund 4a der Nut 4 eingelegt, sodass die Längsrichtung x der wärmeleitenden Folien 5, 6 in der Tiefenrichtung t der Nut 4 verläuft. Schließlich wird die Nut 4 durch ein Füllmaterial 9 verschlossen, sodass das Füllmaterial 9 die Nut 4 zumindest abschnittsweise, vorzugsweise vollständig, abschließt.

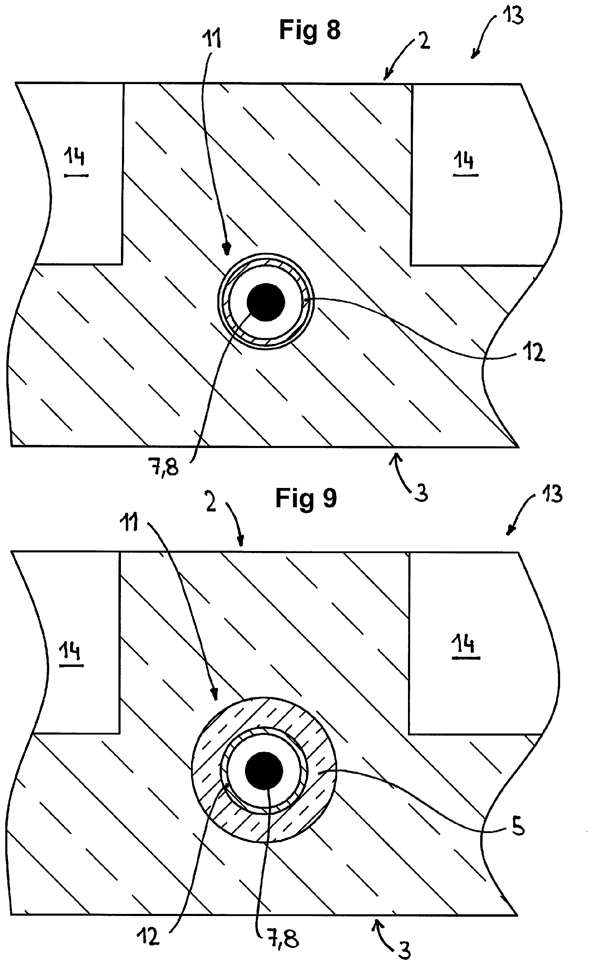

In den Fig 8 und 9 sind zwei Varianten zur Verlegung eines Glasfaser-Lichtwellenleiters 8 in einer Bohrung 11 durch eine Kupferplatte 13 einer Stranggießkokille dargestellt. Gemäß Fig 8 wird eine Metallkanüle 12 mit der Glasfaser 8 in die Bohrung 11 eingezogen, wobei - um einen möglichst guten Wärmeübergang zur Glasfaser 8 zu ermöglichen - der radiale Spalt zwischen der Bohrung 11 und der Kanüle 12 möglichst eng ist. Im Gegensatz dazu sind gemäß Fig 9 zwischen der Bohrung 11 und der Kanüle 12 Schichten einer ersten wärmeleitenden Folie 5 eingelegt, wobei die Dickenrichtung z der Folien 5 in Längsrichtung der Bohrung 11 verläuft. Dadurch wird ein guter Wärmeübergang von der Bohrung 11 zur Glasfaser 8, aber nur ein schlechter Wärmeübergang in der Längsrichtung der Bohrung eingestellt. Durch die geringe Reibung zwischen der Bohrung 11 und den Schichten der ersten wärmeleitenden Folie 5 wird zudem das Einziehen der Kanüle 12 in die Bohrung erleichtert.

Bei der Herstellung der Stranggießkokille mit einem Glasfaser Temperatursensor nach Fig 9 wird wie folgt vorgegangen: Zuerst werden mehrere Schichten einer ersten wärmeleitenden Folie 5 in die Bohrung 11 eingebracht, wobei die Dickenrichtung z der Folien 5 in der Längsrichtung der Bohrung 11 verläuft. Beide Richtungen stehen normal zur Zeichenebene der Fig 9. Beim Einführen der den Glasfaser Lichtwellenleiter 8 beinhaltenden Metallkanüle 12 in die Bohrung 11 werden die Schichten der Folien 5 in der Bohrung 11 durchstoßen, sodass der Spalt zwischen der Innenwand der Bohrung 11 und der Kanüle 12 überbrückt wird.

Alternativ dazu könnten auch mehrere Schichten der ersten wärmeleitenden Folie auf die Kanüle aufgeschoben werden, sodass die Dickenrichtung z der Folien in der Längsrichtung der Kanüle verläuft. Die Kanüle mitsamt der auf der Außenseite aufgeschobenen Schichten und dem Glasfaser-Lichtwellenleiter im Inneren werden anschließend in die Bohrung eingeführt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Stranggießkokille |
| 2 | Kaltseite |
| 3 | Heißseite |
| 4 | Nut |
| 4a | Nutgrund |
| 5 | erste wärmeleitende Folie |
| 6 | zweite wärmeleitende Folie |
| 7 | Temperatursensor |
| 8 | Lichtwellenleiter, Glasfaser |
| 9 | Füllmaterial |
| 10 | reißfeste Schicht |
| 11 | Bohrung |
| 12 | Kanüle |
| 13 | Kupferplatte |
| 14 | Kühlschlitz |
| X | Temperaturmesspunkt |
| b | Breitenrichtung der Nut |
| t | Tiefenrichtung der Nut oder der Bohrung |
| x, y | Längs- und Querrichtung der wärmeleitenden Folie |
| z | Dickenrichtung der wärmeleitenden Folie |

**Patentansprüche**

1. Stranggießkokille (1) mit zumindest einem Temperatursensor (7), umfassend

   - eine Kupferplatte (13) die eine Nut (4) mit einem Nutgrund (4a) aufweist;
   - einen Lichtwellenleiter (8) als Temperatursensor (7) der in einer Kanüle (12) verläuft; und
   - ein Füllmaterial (9) das die Nut (4) zumindest abschnittsweise abschließt,

   **dadurch gekennzeichnet, dass** die Nut (4) auf der Kaltseite (2) der Kupferplatte (13) angeordnet ist, dass eine erste Graphitfolie (5) auf dem Nutgrund (4a) aufliegt und eine zweite Graphitfolie (6) zumindest teilweise auf der ersten Graphitfolie (5) aufliegt, und dass die Kanüle (12) zwischen der ersten (5) und der zweiten Graphitfolie (6) eingebettet ist.

2. Vorrichtung nach Anspruch 1, **dadurch gekennzeichnet, dass** zwischen der zweiten Graphitfolie (6) und dem Füllmaterial (9) ein Textilband angeordnet ist.

3. Vorrichtung nach Anspruch 2, **dadurch gekennzeichnet, dass** die Wärmeleitfähigkeit des Textilbands (10) in deren Dickenrichtung << als die niedrigste Wärmeleitfähigkeit der ersten (5) und zweiten Graphitfolien (6) ist.

4. Vorrichtung nach einem der vorhergehenden Ansprüche, **dadurch gekennzeichnet, dass** das Füllmaterial (9) ein Kunstharz, ein Kunststoff wie Polyester oder PTFE, oder ein Metall ist.

5. Stranggießkokille (1) mit zumindest einem Temperatursensor (7), aufweisend

   - eine Kupferplatte (13) die zumindest teilweise von einer Bohrung (11) durchdrungen ist;
   - einen Lichtwellenleiter (8) als Temperatursensor (7) der in einer Kanüle (12) verläuft; **gekennzeichnet durch**

- eine erste Graphitfolie (5) die über die Längserstreckung der Kanüle (12) zumindest abschnittsweise den Spalt zwischen der Innenwand der Bohrung (11) und der Außenwand der Kanüle (12) überbrückt.

6. Vorrichtung nach einem der vorhergehenden Ansprüche, **dadurch gekennzeichnet, dass** die erste (5) und/oder die zweite (6) Graphitfolie eine anisotrope Wärmeleitfähigkeit aufweist.

7. Vorrichtung nach Anspruch 6, **dadurch gekennzeichnet, dass** die erste (5) und/oder die zweite (6) Graphitfolie im Wesentlichen aus Graphit oder Graphen besteht.

8. Vorrichtung nach einem der Ansprüche 6 bis 7, **dadurch gekennzeichnet, dass** die Dickenrichtung (z) der ersten (5) und/oder zweiten Graphitfolie (6) in der Längsrichtung der Nut (4) oder der Bohrung (11) verläuft.

9. Vorrichtung nach einem der vorhergehenden Ansprüche, **dadurch gekennzeichnet, dass** die Kanüle aus Kunststoff, vorzugsweise PTFE, Glasseide, Fiberglas oder einer Keramik besteht.

10. Vorrichtung nach einem der vorhergehenden Ansprüche, **dadurch gekennzeichnet, dass** der Lichtwellenleiter (8) mehrere Temperaturmesspunkte über der Längserstreckung des Lichtwellenleiters (8) aufweist, wobei die Temperaturmesspunkte vorzugsweise als Faser-Bragg-Gitter ausgebildet sind.

11. Vorrichtung nach Anspruch 10 mit einer Auswerteeinheit zur Auswertung der Temperatur an den Temperaturmesspunkten des Lichtwellenleiters, wobei die Auswerteeinheit mit dem Lichtwellenleiter (8) verbunden ist.

12. Herstellungsverfahren für eine Stranggießkokille (1) mit einem Temperatursensor (7) nach einem der Ansprüche 1 bis 4, wobei die Stranggießkokille (1) eine Kupferplatte mit einer Nut (4) auf deren Kaltseite (2) aufweist und ein Lichtwellenleiter (8) als Temperatursensor (7) in einer Kanüle (12) verläuft, umfassend die Verfahrensschritte:

- Einbringen der Kanüle (12) zwischen einer ersten Graphitfolie (5) und einer zweiten Graphitfolie (6), sodass die Dickenrichtung (z) der beiden Graphitfolien (5,6) normal zur Längsrichtung der Kanüle (12) verläuft;
- Einlegen der die Kanüle (12) einbettenden Graphitfolien (5, 6) in den Nutgrund (4a) der Nut (4) derart, dass die Richtung der Graphitfolien mit der größten Wärmeleitfähigkeit (x oder y) in der Tiefenrichtung t der Nut (4) verläuft; und
- Abschließen der Nut (4) durch ein Füllmaterial (9), wobei das Füllmaterial (9) die Nut (4) zumindest abschnittsweise abschließt.

13. Herstellungsverfahren für eine Stranggießkokille (1) mit einem Temperatursensor (7) nach einem der Ansprüche 5 bis 11, wobei die Stranggießkokille (1) eine Bohrung (11) aufweist und ein Lichtwellenleiter (8) als Temperatursensor (7) in einer Kanüle (12) verläuft, umfassend die Verfahrensschritte:

- Aufschieben von mehreren Schichten einer ersten Graphitfolie (5) auf die Kanüle (12), sodass die Dickenrichtung (z) der ersten Graphitfolie (5) in Längsrichtung der Kanüle (12) verläuft und die Schichten der ersten Graphitfolie an der Mantelfläche der Kanüle (12) anliegen;
- Einführen der ersten Graphitfolien (5), der Kanüle (12) und des Lichtwellenleiters (8) in die Bohrung (11), wodurch zumindest abschnittsweise die Schichten der ersten Graphitfolie (5) an der Innenwand der Bohrung (11) anliegen.

14. Herstellungsverfahren für eine Stranggießkokille (1) mit einem Temperatursensor (7) nach einem der Ansprüche 5 bis 11, wobei die Stranggießkokille (1) eine Bohrung (11) aufweist und ein Lichtwellenleiter (8) als Temperatursensor (7) in einer Kanüle (12) verläuft, umfassend die Verfahrensschritte:

- Einführen von mehreren ersten Graphitfolien (5) in die Bohrung (11), sodass die Dickenrichtung (z) der ersten Graphitfolien (5) in der Längsrichtung der Bohrung (11) verlaufen;
- Durchstoßen der von ersten Graphitfolien (5) ausgefüllten Bohrung (11);
- Einführen der den Lichtwellenleiter (8) beinhaltenden Kanüle (12) in die Bohrung (11), wodurch die ersten Graphitfolien (5) den Spalt zwischen der Innenwand der Bohrung (11) und der Kanüle (12) ausfüllen.

15. Herstellungsverfahren nach Anspruch 14, **dadurch gekennzeichnet, dass** das Durchstoßen durch die Kanüle (12) erfolgt, die den Lichtwellenleiter (8) beinhaltet.

## Claims

1. Continuous casting mould (1) with at least one temperature sensor (7), comprising

- a copper plate (13), which has a groove (4) with a groove base (4a);
- an optical waveguide (8) as a temperature sensor (7), which runs in a cannula (12); and
- a filling material (9), which closes off the groove (4) at least in certain portions,

**characterized in that** the groove (4) is arranged on the cold side (2) of the copper plate (13), **in that** a first graphite foil (5) rests on the groove base (4a) and a second graphite foil (6) rests at least partially on the first graphite foil (5), and **in that** the cannula (12) is embedded between the first graphite foil (5) and the second graphite foil (6).

2. Device according to Claim 1, **characterized in that** a textile strip is arranged between the second graphite foil (6) and the filling material (9).

3. Device according to Claim 2, **characterized in that** the thermal conductivity of the textile strip (10) in the direction of its thickness is << than the lowest thermal conductivity of the first graphite foil (5) and the second graphite foil (6).

4. Device according to one of the preceding claims, **characterized in that** the filling material (9) is a synthetic resin, a plastic such as polyester or PTFE, or a metal.

5. Continuous casting mould (1) with at least one temperature sensor (7), having

    - a copper plate (13), which is at least partially penetrated by a bore (11);
    - an optical waveguide (8) as a temperature sensor (7), which runs in a cannula (12);
    **characterized by**
    - a first graphite foil (5), which at least in certain portions bridges the gap between the inner wall of the bore (11) and the outer wall of the cannula (12) over the longitudinal extent of the cannula (12).

6. Device according to one of the preceding claims, **characterized in that** the first graphite foil (5) and/or the second graphite foil (6) has an anisotropic thermal conductivity.

7. Device according to Claim 6, **characterized in that** the first graphite foil (5) and/or the second graphite foil (6) substantially consists of graphite or graphene.

8. Device according to either of Claims 6 and 7, **characterized in that** the thickness direction (z) of the first graphite foil (5) and/or the second graphite foil (6) is in the longitudinal direction of the groove (4) or of the bore (11).

9. Device according to one of the preceding claims, **characterized in that** the cannula consists of plastic, preferably PTFE, glass silk, glass fibre or a ceramic.

10. Device according to one of the preceding claims, **characterized in that** the optical waveguide (8) has a number of temperature measuring points over the longitudinal extent of the optical waveguide (8), the temperature measuring points preferably being formed as a fibre Bragg grating.

11. Device according to Claim 10 with an evaluation unit for evaluating the temperature at the temperature measuring points of the optical waveguide, the evaluation unit being connected to the optical waveguide (8).

12. Production method for a continuous casting mould (1) with a temperature sensor (7) according to one of Claims 1 to 4,
the continuous casting mould (1) having a copper plate with a groove (4) on its cold side (2) and an optical waveguide (8) running in a cannula (12) as a temperature sensor (7), comprising the method steps of:

    - introducing the cannula (12) between a first graphite foil (5) and a second graphite foil (6), so that the thickness direction (z) of the two graphite foils (5, 6) is normal to the longitudinal direction of the cannula (12);
    - placing the graphite foils (5, 6) that embed the cannula (12) into the groove base (4a) of the groove (4) in such a way that the direction of the graphite foils with the greatest thermal conductivity (x or y) is in the depth direction t of the groove (4); and
    - closing off the groove (4) by a filling material (9), the filling material (9) closing off the groove (4) at least in certain portions.

13. Production method for a continuous casting mould (1) with a temperature sensor (7) according to one of Claims 5 to 11, the continuous casting mould (1) having a bore (11) and an optical waveguide (8) running in a cannula (12) as a temperature sensor (7), comprising the method steps of:

    - pushing a number of layers of a first graphite foil (5) onto the cannula (12), so that the thickness direction (z) of the first graphite foil (5) is in the longitudinal direction of the cannula (12) and the layers of the first graphite foil lie against the lateral surface of the cannula (12);
    - introducing the first graphite foil (5), the cannula (12) and the optical waveguide (8) into the bore (11), whereby at least in certain portions the layers of the first graphite foil (5) lie against the inner wall of the bore (11).

**14.** Production method for a continuous casting mould (1) with a temperature sensor (7) according to one of Claims 5 to 11, the continuous casting mould (1) having a bore (11) and an optical waveguide (8) running in a cannula (12) as a temperature sensor (7), comprising the method steps of:

- introducing a number of first graphite foils (5) into the bore (11), so that the thickness direction (z) of the first graphite foils (5) is in the longitudinal direction of the bore (11) ;
- piercing the bore (11) that is filled by first graphite foils (5) ;
- introducing the cannula (12) containing the optical waveguide (8) into the bore (11), whereby the first graphite foils (5) fill the gap between the inner wall of the bore (11) and the cannula (12).

**15.** Production method according to Claim 14, **characterized in that** the piercing is performed by the cannula (12), which contains the optical waveguide (8).

## Revendications

**1.** Lingotière de coulée continue (1) équipée d'au moins un capteur de température (7), comprenant

- une plaque en cuivre (13) qui comporte une rainure (4) avec un fond de rainure (4a) ;
- un guide d'ondes optiques (8) en tant que capteur de température (7), qui s'étend dans une canule (12) ; et
- une matière de remplissage (9) qui ferme la rainure (4), au moins par endroits,

**caractérisée en ce que** la rainure (4) est située sur le côté froid (2) de la plaque en cuivre (13), **en ce qu'**un premier film en graphite (5) repose sur le fond de rainure (4a) et un second film en graphite (6) repose, au moins en partie, sur le premier film en graphite (5), et **en ce que** la canule (12) est insérée entre le premier (5) et le second film en graphite (6).

**2.** Dispositif selon la revendication 1, **caractérisé en ce qu'**une bande textile est disposée entre le second film en graphite (6) et la matière de remplissage (9).

**3.** Dispositif selon la revendication 2, **caractérisé en ce que** la conductivité thermique de la bande textile (10) dans le sens de l'épaisseur de cette dernière est << à la conductivité thermique la plus faible du premier (5) et du second film en graphite (6).

**4.** Dispositif selon l'une des revendications précédentes, **caractérisé en ce que** la matière de remplissage (9) est une résine synthétique, une matière synthétique telle que le polyester ou le PTFE, ou un métal.

**5.** Lingotière de coulée continue (1) équipée d'au moins un capteur de température (7), comprenant

- une plaque en cuivre (13) qui est percée, au moins en partie, d'un alésage (11) ;
- un guide d'ondes optiques (8) en tant que capteur de température (7), qui s'étend dans une canule (12) ; **caractérisée par**
- un premier film en graphite (5) qui comble, au moins par endroits, la fente entre la paroi intérieure de l'alésage (11) et la paroi extérieure de la canule (12) sur l'étendue longitudinale de la canule (12).

**6.** Procédé selon l'une des revendications précédentes, **caractérisé en ce que** le premier (5) et/ou le second (6) film en graphite présente(nt) une conductivité thermique anisotrope.

**7.** Dispositif selon la revendication 6, **caractérisé en ce que** le premier (5) et/ou le second (6) film en graphite est/sont composé(s) principalement de graphite ou de graphène.

**8.** Dispositif selon l'une des revendications 6 à 7, **caractérisé en ce que** le sens de l'épaisseur (z) du premier (5) et/ou du second film en graphite (6) s'étend dans la direction longitudinale de la rainure (4) ou de l'alésage (11).

**9.** Dispositif selon l'une des revendications précédentes, **caractérisé en ce que** la canule est en matière synthétique, de préférence en PTFE, soie de verre, fibre de verre, ou en céramique.

**10.** Dispositif selon l'une des revendications précédentes, **caractérisé en ce que** le guide d'ondes optiques (8) présente plusieurs points de mesure de température sur son étendue longitudinale, les points de mesure de température étant de préférence réalisés en tant que réseau de Bragg à fibre.

**11.** Dispositif selon la revendication 10, comprenant une unité d'analyse pour l'analyse de la température au niveau des points de mesure de température du guide d'ondes optiques, l'unité d'analyse étant reliée au guide d'ondes optiques (8).

**12.** Procédé de fabrication d'une lingotière de coulée continue (1) équipée d'un capteur de température (7) selon l'une des revendications 1 à 4, dans lequel la lingotière de coulée continue (1) comprend une plaque en cuivre pourvue d'une rainure (4) sur son côté froid (2) et un guide d'ondes optiques (8) s'étend en tant que capteur de température (7) dans une canule (12), comprenant les étapes de procédé consistant à :

- introduire la canule (12) entre un premier film en graphite (5) et un second film en graphite (6) de façon que le sens de l'épaisseur (z) des deux films en graphite (5, 6) soit perpendiculaire à la direction longitudinale de la canule (12) ;
- insérer les films en graphite (5, 6) incorporant la canule (12) dans le fond de rainure (4a) de la rainure (4) de façon que la direction des films en graphite présentant la conductivité thermique la plus élevée (x ou y) s'étende dans le sens de la profondeur t de la rainure (4) ; et
- fermer la rainure (4) à l'aide d'une matière de remplissage (9), la matière de remplissage (9) fermant la rainure (4) au moins par endroits.

13. Procédé de fabrication d'une lingotière de coulée continue (1) équipée d'un capteur de température (7) selon l'une des revendications 5 à 11, dans lequel la lingotière de coulée continue (1) est pourvue d'un alésage (11) et un guide d'ondes optiques (8) en tant que capteur de température (7) s'étend dans une canule (12), comprenant les étapes de procédé consistant à :

- enfiler plusieurs couches d'un premier film en graphite (5) sur la canule (12), de façon que le sens de l'épaisseur (z) du premier film en graphite (5) s'étende dans la direction longitudinale de la canule (2) et que les couches du premier film en graphite soient en contact avec la surface périphérique de la canule (12) ;
- introduire le premier film en graphite (5), la canule (12) et le guide d'ondes optiques (8) dans l'alésage (11), grâce à quoi, au moins par endroits, les couches du premier film en graphite (5) sont en contact avec la paroi intérieure de l'alésage (11).

14. Procédé de fabrication d'une lingotière de coulée continue (1) équipée d'un capteur de température (7) selon l'une des revendications 5 à 11, dans lequel la lingotière de coulée continue (1) est pourvue d'un alésage (11) et un guide d'ondes optiques (8) en tant que capteur de température (7) s'étend dans une canule (12), comprenant les étapes de procédé consistant à :

- introduire plusieurs premiers films en graphite (5) dans l'alésage (11), de façon que le sens de l'épaisseur (z) des premiers films en graphite (5) s'étende dans la direction longitudinale de l'alésage (11) ;
- traverser, en poussant, l'alésage (11) rempli de premiers films en graphite (5) ;
- introduire dans l'alésage (11) la canule (12) contenant le guide d'ondes optiques (8), grâce à quoi les premiers films en graphite (5) remplissent la fente entre la paroi intérieure de l'alésage (11) et la canule (12).

15. Procédé de fabrication selon la revendication 14, **caractérisé en ce que** c'est la canule (12) contenant le guide d'ondes optiques (8) qui effectue la traversée en poussant.

# Fig 1 Stand der Technik

## Fig 2

## Fig 3

**Fig 4**

**Fig 5**

# Fig 6

# Fig 7

**Fig 8**

**Fig 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H0947855 B
- JP 2008043981 B

- DE 102009060548 A1